# EUROPÄISCHE PATENTSCHRIFT

(11) **EP 2 596 274 B1**
(45) Veröffentlichungstag und Bekanntmachung des Hinweises auf die Patenterteilung: **18.03.2020**
(21) Anmeldenummer: 11727929.9
(22) Anmeldetag: 24.06.2011
(51) Int. Cl.: F16L 53/00

(54) **BEHEIZBARE MEDIENLEITUNG UND VERFAHREN ZU DEREN HERSTELLUNG**
HEATABLE FLUID LINE AND METHOD FOR ITS PRODUCTION
CONDUITE CHAUFFABLE POUR FLUIDES ET MÉTHODE DE SA PRODUCTION

(30) Priorität: 23.07.2010 DE 102010032189
(43) Veröffentlichungstag der Anmeldung: 29.05.2013
(73) Patentinhaber: Voss Automotive GmbH, 51688 Wipperfürth (DE)
(72) Erfinder: SCHWARZKOPF, Otfried, 51515 Kürten (DE); BERG, Manfred, 51688 Wipperfürth (DE); BRANDT, Josef, 51688 Wipperfürth (DE); ETSCHEID,Tobias, 51789 Lindlar (DE); HEIENBROK, Mark, 51766 Engelskirchen (DE); ISENBURG, Marco, 40885 Ratingen (DE); JESCHONNEK, Markus, 51688 Wipperfürth (DE); SCHÖNEBERG, Christoph, 51688 Wipperfürth (DE); PLUM, Horst, 51427 Bergisch Gladbach (DE)
(74) Vertreter: Rebbereh, Cornelia
(86) Internationale Anmeldenummer: PCT/EP2011/003136
(87) Internationale Veröffentlichungsnummer: WO 2012/010246

(56) Entgegenhaltungen:
- WO-A1-2008/023021
- WO-A1-2008/131993
- WO-A1-2010/057819
- DE-A1-102008 034 238
- DE-U1-202006 003 590
- DE-U1-202007 010 502
- DE-U1-202008 003 908

## Beschreibung

Die Erfindung betrifft eine beheizbare Medienleitung und Verfahren zu deren Herstellung gemäß dem Oberbegriff der Ansprüche 1 und 8.

Derartige beheizbare Medienleitungen und Verfahren zu deren Herstellung sind im Stand der Technik bekannt. Insbesondere in Fahrzeugen sind eine Reihe von Medienleitungen vorgesehen zum Leiten von zumeist flüssigen Medien. Diese Medienleitungen drohen bei niedrigen Temperaturen einzufrieren, weswegen eine Beheizung vorgesehen wird. Leitungsverbinder dienen zum Verbinden von zumindest zwei Medienleitungen oder zur Anschlussverbindung einer Medienleitung mit einem beliebigen Aggregat. Durch die Medienleitungen werden oftmals solche Medien geführt, die aufgrund eines relativ hohen Gefrierpunktes bereits bei noch recht hohen Umgebungstemperaturen zum Gefrieren neigen, wodurch die Funktionsfähigkeit beispielsweise eines Fahrzeugs beeinträchtigt oder sogar erheblich gestört werden kann. Ersichtlich ist dies insbesondere bei Wasserleitungen für Scheibenwaschanlagen der Fall, ebenso wie bei Medienleitungen mit einer wässrigen Harnstofflösung als Medium, die als NOₓ-Reaktionsadditiv für Dieselmotoren mit sogenannten SCR-Katalysatoren eingesetzt werden.

Aus der EP 1 985 908 A1 ist ein Leitungsverbinder für Medienleitungen bekannt, der aus einem Verbinderstück mit Anschlussabschnitt zur Anschlussverbindung mit der Medienleitung oder einem Aggregat und mit einem an den Anschlussabschnitt angrenzenden Übergangsabschnitt mit einem Strömungskanal besteht. Zumindest im Bereich des Übergangsabschnitts sind elektrische Heizmittel in einer den Strömungskanal zumindest teilweise umschließenden Anordnung vorgesehen. Die somit im Übergangsabschnitt, also außerhalb des Anschlussabschnitts angeordneten elektrischen Heizmittel dienen dazu, ein Einfrieren des jeweiligen Mediums innerhalb des Verbindungsstücks zu vermeiden oder aufzuheben durch Auftauen des eingefrorenen Mediums. Der Heizdraht umgibt das Verbinderstück außenseitig spulenartig gewickelt, wobei im Innenbereich zumindest eine weitere Spulenwicklung im Bereich des Strömungskanals angeordnet wird, so dass durch Fließen eines Stroms durch den äußeren Heizdraht eine Induktion in der inneren Spulenwicklung zum Erzeugen von Wärme vorgesehen ist. Die Medienleitung besteht aus einer inneren Rohrleitung mit einem am Umfang angeordneten Heizleiter, wobei Rohrleitung und Heizleiter von einer äußeren Umhüllung umschlossen werden, wie durch ein Wellrohr. An den beiden Enden der Medienleitung werden Leitungsverbinder angeschlossen. Der auf der Rohrleitung angeordnete Heizleiter wird vor dem Auffügen des Wellrohres mit einem Klebeband umwickelt und hierdurch an der Rohrleitung fixiert. Alternativ wird vorgeschlagen, eine Lack- oder Kleberschicht zur Fixierung vorzusehen. Die Heizdrähte der Leitungsverbinder und die Heizleitung der Rohrleitung sind miteinander elektrisch verschaltet, wobei jeweils der Heizdraht eines der Leitungsverbinder mit einem der Wicklungsdrähte der die Rohrleitung umgebenden Heizleitung elektrisch in Reihe geschaltet und die Anschlussenden der beiden Reihenschaltungen an den beiden Leitungsverbindern nach außen geführt werden, wo ein Anschluss an eine Spannungsversorgung bzw. eine Weiterverbindung vorgesehen ist. Alternativ ist offenbart, dass die Heizdrähte der Leitungsverbinder und der die Rohrleitung umgebenden Wicklungen als elektrische Reihenschaltung aller Heizdrähte vorgesehen ist mit nur einem äußeren Leitungsanschluss. In jedem der Fälle wird eine mit Heizdrähten bewickelte Rohrleitung nachträglich abgelängt, bevor eine Verbindung mit den beiden Leitungsverbindern und den darauf aufgefügten Heizdrähten erfolgt. Dies ist beispielsweise in der DE 10 2005 037 183 B3 bzw. der EP 1 519 098 B1 offenbart. Es erfolgt eine aufwendige Konnektierung der mit Heizdrähten bewickelten Einzelkomponenten.

Entsprechend der DE 10 2005 037 183 B3 wird die Rohrleitung zunächst als Endlosrohr ausgebildet und nachfolgend auf eine bestimmte Länge abgelängt. Diese Rohrleitung umfasst bereits die Heizleitung als elektrisch leitfähige Kunststoffschicht. Alternativ wird in dieser Druckschrift des Standes der Technik offenbart, dass die elektrischen Zuleitungen in das Rohr eingeschmolzen werden. Ferner ist offenbart, dass die Rohrleitung Nuten aufweisen kann, die bis zum Heizwiderstand reichen und in die elektrischen Zuleitungen eingeclipst oder eingeklebt werden. Die elektrischen Zuleitungen können ansonsten mit dem Heizwiderstand und gegebenenfalls weiteren Bestandteilen der Rohrleitung extrudiert werden, so dass die elektrischen Zuleitungen und der Heizwiderstand gemeinsam z.B. innerhalb eines Extrusionsprozesses hergestellt werden.

Entsprechend der EP 1 519 098 B1 ist bei einer elektrisch beheizbaren Medienleitung bzw. Flüssigkeitsleitung der Heizdraht wendelförmig um eine innere Kunststoffschicht herumgewickelt und unmittelbar um die Kunststoffschicht um den Heizdraht herum ein elektrisch isolierendes Band gewickelt. Der Heizdraht ist dabei in Form einer Doppelwendel um die Kunststoffschicht herumgewickelt und die Enden des Heizdrahtes sind mit einem Stecker verbunden, der in eine Steckdose einer Spannungsquelle eingesteckt werden kann.

Aus der EP 1 721 097 B1 ist ferner eine elektrisch beheizbare Medienleitung bekannt, bei der die Medienleitung, ein Kabel zum Beheizen der Medienleitung und zumindest ein elektrischer Verbinder zum Verbinden des Kabels mit einer Stromquelle vorgesehen sind. Die Medienleitung und das Kabel sind vollständig in einer äußeren Schutzhülle aufgenommen, die einen ersten Schlauch mit einem inneren Querschnitt aufweist, der den äußeren Querschnitt der Medienleitung übersteigt. An einem oder zwei Enden der Verkabelung ist das Kabel von der Medienleitung getrennt und innerhalb eines Abzweigstücks geführt. Es wird zu einem zweiten Schlauch an dem elektrischen Verbinder geführt. Die äußere Schutzhülle umfasst den ersten Schlauch, das Abzweigstück und den zweiten Schlauch, wobei das Abzweigstück zwischen dem ersten und zweiten Schlauch angeordnet ist. Zumindest einseitig ist somit das Kabel nicht zu einem Leitungsverbinder geführt, sondern direkt in die abzweigende Leitung und dort zu einem Steckverbinder zum Anschließen an eine elektrische Energiequelle. Der Leitungsverbinder wird somit entsprechend dieser Druckschrift des Standes der Technik nicht beheizt, sondern lediglich die Medienleitung.

Aus der EP 2 107 291 A2 ist eine Fluidleitung bekannt, bei der Leitungsverbinder an den Enden einer elastischen Rohrleitung angebracht werden. Ein Heizleiter wird in die Rohrleitung eingebracht und deren Enden werden zwischen Leitungsverbindungsabschnitten eingepresst, die in den Leitungsverbindern angeordnet sind. Der Heizleiter ist mit einem Anschlussdraht durch einen Verbindungsabschnitt verbunden und hierdurch mit einer Energiequelle. Der Heizleiter ist zur Schlaufe gelegt innerhalb der Rohrleitung und endet im Bereich der Schlaufe vor dem zweiten Leitungsverbinder. Aufgrund des innerhalb der Rohrleitung liegenden Heizleiters ist zwar eine direkte Wärmeeinkopplung in das innerhalb der Medienleitung bzw. Rohrleitung fließende Medium möglich, jedoch müssen die Litzen des Heizleiters eine hohe Beständigkeit gegenüber dem in der Medienleitung strömenden Medium aufweisen, so dass sich bezüglich des Heizleiters verhältnismäßig hohe Kosten ergeben. Weiter erweist es sich als mühsam, den zur Schlaufe, also doppelt gelegten Heizleiter in die Rohrleitung einzubringen in einer gewünschten gewendelten oder geschlängelten Anordnung. Ferner sind auch die Kosten für eine solche Rohrleitung höher als bei Rohrleitungen, bei denen der Heizleiter auf deren Außenseite geführt wird, da der lichte Durchmesser, ggf. auch die Wandstärke, einer solchen Rohrleitung, in deren Innerem der Heizleiter geführt wird, vergleichsweise größer sein muss, um diese unterbringen zu können, ohne ein Strömungshindernis für das Medium zu schaffen.

DE 20 2007 010502 U1, WO 2008/023021 A1, DE 20 2008 003908 U1, DE 20 2006 003590 U1, WO 2008/131993 A1, WO 2010/057819 A1 und DE 10 2008 034238 A1 zeigen weitere bekannten beheizbaren Medienleitungen.

Als teuer erweisen sich die bei dem Vorsehen von mit Heizdraht umwickelten Leitungsverbindern und separat mit Heizdraht versehener Rohrleitung das Verbinden der jeweiligen Heizdrähte von Leitungsverbindern und Rohrleitung, da dies zeitaufwändig ist und zum Sicherstellen einer ordnungsgemäßen elektrischen Verbindung auch sehr sorgfältig erfolgen muss, somit die Fertigung hierdurch recht lange dauert. Bei dem bisherigen Verfahren wird eine Rohrleitung mit Heizdraht umwickelt und mit Klebe- bzw. Gewebeklebeband vorkonfektioniert und auf Coils bevorratet. Für die jeweils herzustellende beheizbare Medienleitung kann sodann das umwickelte Rohr in der gewünschten Länge abgelängt, das Klebe- bzw. Gewebeklebeband an den beiden Enden des abgelängten Rohres entfernt, die jeweiligen Heizdrahtenden dort wieder abgewickelt, die Rohrüberlänge abgeschnitten, das Rohr nachgeschnitten, die Trennstellen gereinigt und die Heizdrahtenden mit entsprechenden Heizdrahtenden von auf Leitungsverbindern angeordneten Heizdrähten verbunden werden, insbesondere über Crimpstellen. Einerseits ist somit eine Reihe von Bearbeitungsschritten erforderlich, um die beheizbare Medienleitung, enthaltend das umwickelte Rohr und die Leitungsverbinder, herzustellen bzw. zunächst einmal Rohr und Leitungsverbinder bzw. die darauf angeordneten Heizdrähte miteinander zu verbinden. Das Vorsehen zahlreicher Crimpstellen führt zu hohen Herstellungskosten. Es ergeben sich somit Kosten durch den verhältnismäßig hohen Fertigungsaufwand. Bei der späteren Verwendung der beheizbaren Medienleitung bspw. in einem Fahrzeug, insbesondere Lastkraftwagen, sind diese Crimpstellen Erschütterungen ausgesetzt sind, so dass hier Beschädigungen in der Isolierung der Crimpstellen auftreten können, die zu Kurzschlüssen und den hiermit zusammenhängenden Folgen führen können.

Der vorliegenden Erfindung liegt nun die Aufgabe zugrunde, eine beheizbare Medienleitung und ein Verfahren zu deren Herstellung vorzusehen, bei der ein möglichst geringer Fertigungsaufwand bei Vermeiden einer großen Anzahl von Verbindungsstellen an dem Heizelement und zugleich eine kontinuierliche Fertigung der beheizbaren Medienleitung ermöglicht wird.

Die Aufgabe wird durch ein Verfahren nach Anspruch 1 und eine beheizbare Medienleitung nach Anspruch 8 gelöst.

Weiterbildungen der Erfindung sind in den abhängigen Ansprüchen definiert.

Dadurch wird eine beheizbare Medienleitung geschaffen, bei der ein und dieselben Litzen, die sich entlang der Medienleitung erstrecken, auch zum Beheizen des oder der Leitungsverbinder dienen und sich entsprechend auch entlang von diesem/diesen erstrecken. Es wird also ein gemeinsames Heizelement zum Beheizen der Medienleitung und des oder der Leitungsverbinder verwendet. Dessen Litzen erstrecken sich somit unterbrechungsfrei entlang der Medienleitung und entlang dem zumindest einen Leitungsverbinder. Auf das Vorsehen zusätzlicher Litzen für das Beheizen der Leitungsverbinder wird im Unterschied zum Stand der Technik verzichtet, so dass die ansonsten auf den vorkonfektionierten Leitungsverbindern vorgesehenen Litzen und entsprechend auch die bei diesen erforderlichen Verbindungsstellen zwischen diesen Litzen und denen entlang der Medienleitung entfallen. Verbindungsstellen zwischen Medienleitung und Leitungsverbinder sind somit nicht vorgesehen, jedoch kann eine Verbindungsstelle zwischen zwei Litzen oder zu Kaltleitern zum Anschließen der Litzen des Heizelements an eine Strom- oder Spannungsversorgung vorgesehen sein. Es wird zunächst eine vorkonfektionierte Medienleitung, die mit dem Heizelement umwickelt ist, verwendet, wobei ein Befestigungsmittel, insbesondere ein Klebe-, Gewebeklebe- oder Gewebeband, das Heizelement auf der Außenseite der Medienleitung fixiert. Diese vorkonfektionierte Medienleitung wird auf eine erste Länge abgelängt, die der für den jeweiligen Anwendungsfall gewünschten Länge entspricht zuzüglich einer Längenzugabe, die so viel Heizelementlänge umfasst, dass diese für das Bewickeln der mit der Medienleitung zu verbindenden Leitungsverbinder sowie ggfs. noch weiterer hiermit verbundener Einrichtungen ausreicht. Nach dem ersten Ablängen der vorkonfektionierten Medienleitung wird zunächst das Befestigungsmittel entfernt, sodann das Heizelement in dem zusätzlich abgelängten Abschnitt des abgelängten Medienleitungsabschnitts abgewickelt, so dass an den Enden des Medienleitungsabschnitts freies Heizelement, insbesondere zwei Litzen des Heizelements an beiden Enden des Medienleitungsabschnitts frei verfügbar sind. Der überschießende zunächst zugegebene Abschnitt an dem oder den Enden des Medienleitungsabschnitts wird nachfolgend ebenfalls abgetrennt. Es verbleibt somit der zweimal abgelängte Medienleitungsabschnitt, der nachfolgend als Medienleitung bezeichnet wird. Von der verbleibenden in der für den Anwendungsfall gewünschten Länge umwickelten Medienleitung bleibt endseitig zumindest an einer Seite das für das Umwickeln des mit der Medienleitung zu verbindenden Leitungsverbinders überschießende Ende des Heizelements frei. In einem weiteren Bearbeitungsschritt wird sodann die zumeist rohrförmige Medienleitung mit dem zumindest einen Leitungsverbinder verbunden, um den Fluidweg zu vervollständigen. Die Verbindung zwischen der Medienleitung und dem Leitungsverbinder oder den beiden Leitungsverbindern, die endseitig an die Medienleitung angefügt werden, kann bspw. durch Dornen oder Lasern erfolgen. Das von dem bewusst zu lang abgetrennten jeweiligen Teilabschnitt der Medienleitung abgewickelte Heizelement wird sodann auf die jeweiligen Leitungsverbinder aufgewickelt oder aufgebracht, um auch für diese eine Beheizbarkeit vorzusehen. Im Unterschied zum Stand der Technik wird also nicht ein bereits mit Heizelement versehener Leitungsverbinder mit der vorkonfektionierten Medienleitung verbunden, sondern vielmehr ein noch ohne jegliches Heizelement versehener Leitungsverbinder. Somit sind auch keine Crimpstellen oder anderen Verbindungsstellen des Heizelements beim Übergang von der Medienleitung auf den Leitungsverbinder erforderlich. Eine Befestigung auf dem Leitungsverbinder kann bspw. durch Vorsehen von Formelementen und/oder durch anderweitige Befestigungsmittel, wie bspw. Klebe-, Gewebeklebe- oder Gewebeband erfolgen.

Vorteilhaft erstrecken sich die Litzen verbindungsstellenfrei im Übergangsbereich zwischen Medienleitung und Leitungsverbinder und durchgängig entlang dem Leitungsverbinder und der Medienleitung auf deren jeweiliger Außenseite. Hierdurch ist es möglich, den gesamten Übergangsbereich zwischen Medienleitung und Leitungsverbinder frei von Verbindungsstellen zu halten. Gerade in dem Übergangsbereich von der zumeist weniger starren Medienleitung zu den recht starren Leitungsverbindern könnten Verbindungsstellen besonders anfällig für Beschädigungen sein, die durch Schwingungen hervorgerufen werden. Hier keine Verbindungsstellen zu Kaltleitern oder der insbesondere zwei sich durchgängig entlang von Medienleitung und Leitungsverbinder erstreckenden Litzen vorzusehen, erweist sich daher als vorteilhaft.

Die im Bereich des oder der Leitungsverbinder angeordneten freien Heizelementenden bzw. Litzenenden können miteinander verbunden und somit geschlossen oder können an einen jeweiligen Kaltleiter angeschlossen werden, um hierüber eine Verbindung mit einem Einspeiseverbinder zum Anschließen an einer Strom- oder Spannungsquelle vorzusehen. Auch ein direktes Verbinden der offenen Enden des Heizelementes mit einem Einspeiseverbinder zum Anschließen an einer Strom- oder Spannungsquelle ist möglich.

Vor dem Verbinden des Medienleitungsabschnitts mit dem zumindest einen Leitungsverbinder kann vorteilhaft zumindest eine Einrichtung zum Schutz und/oder zur Isolation der Medienleitung um diese herum angeordnet werden, insbesondere ein Wellrohr axial auf diese aufgeschoben werden. Grundsätzlich ist es ebenfalls möglich, sofern bereits zwei Leitungsverbinder endseitig mit der Medienleitung verbunden wurden, eine in ihrer Längsrichtung geschlitzte Schutzeinrichtung, insbesondere ein in Längsrichtung geschlitztes Wellrohr, seitlich, also radial bezüglich der Medienleitung auf diese aufzufügen.

Ferner kann zumindest eine Einrichtung zum Schutz- und/oder zur Isolation des Leitungsverbinders und/oder des Übergangsbereichs zwischen Medienleitung und Leitungsverbinder um diese herum angeordnet werden, insbesondere Schutzkappen zur Ummantelung des zumindest einen Leitungsverbinders und des zumindest einen Übergangsbereich zu der Medienleitung diese und/oder die diese umgebende Schutz- und Isoliereinrichtung umgebend, also z.B. ein Wellrohr. Derartige Schutzkappen umgeben dann nicht nur die Leitungsverbinder sowie den Übergangsbereich zur Medienleitung, sondern auch einen Teil des diese ummantelnden Wellrohres, so dass eine kompakte Einheit zwischen der rohrförmigen Medienleitung und den Leitungsverbindern zum Ausbilden einer vollständig beheizbaren Medienleitung vorgesehen wird, wobei auch eine Abzweigstelle des Heizelementes zum Anschließen von diesem an einer Energiequelle durch das Ummanteln mit solchen Schutzkappen gegen Beschädigung geschützt werden kann.

Als besonders vorteilhaft erweist es sich, das Heizelement über die Längserstreckung der Medienleitung hinweg mit abschnittsweise unterschiedlicher Steigung auf diese aufzuwickeln. Hierdurch wird die Möglichkeit geschaffen, einen Heizelementvorrat abschnittsweise auf der vorkonfektionierten Medienleitung vorzusehen. Hierdurch wird es möglich, von der vorkonfektionierten Medienleitung jeweils Abschnitte abzutrennen, die endseitig bereits den gewünschten Heizelementvorrat aufweisen, so dass für das Bewickeln von Leitungsverbindern mit Heizelement eine ausreichende Länge an Heizelement vorhanden ist. Die von der Medienleitung nach Abwickeln des zum Bewickeln des Leitungsverbinders benötigten Heizelelements abzutrennenden oder abgetrennten und wegzuwerfenden endseitigen Abschnitte können hier kürzer sein als beim Vorsehen des Heizelements mit einer gleichmäßigen Steigung auf der Außenseite der Medienleitung.

Insbesondere wird das Heizelement abschnittsweise mit einer geringeren Steigung als in dem übrigen Bewicklungsbereich um die Medienleitung herum angeordnet. Entlang der Haupterstreckung der Medienleitung kann das Heizelement mit einer verhältnismäßig großen Steigung, insbesondere einer Steigung von etwa 20 - 150 mm, insbesondere mit einer Steigung von 40 - 80 mm auf der Medienleitung vorgesehen werden. Das Heizelement kann dabei mäandriert und/oder in Form von langgestreckten Wellen und/oder vorzugsweise spiralförmig geführt sein. Grundsätzlich ist es sogar möglich, die Litzen des Heizelements parallel zur Medienleitung verlaufen zu lassen, da bereits hierüber eine ausreichende Wärmeeinkopplung erzielt werden kann und zugleich ein effizienter Materialeinsatz bezüglich der Litzenlänge möglich ist. Dann wäre lediglich abschnittsweise eine geringere Steigung bezüglich der Litzen des Heizelementes zum Schaffen von Heizelementvorrat vorzusehen. Bei einem Formbiegen der Medienleitung erweist es sich allerdings als vorteilhafter, die Litzen um die Medienleitung herum mit einer Steigung vorzusehen, die kleiner unendlich ist. Eine große Steigung ist in der Regel energetisch zwar ausreichend, ermöglicht also eine ausreichende Wärmeeinkopplung. Aus technischen Aspekten heraus beträgt die Steigung der Litzen des Heizelementes entlang der Medienleitung jedoch vorteilhaft lediglich bis zu 150 mm. Bei Steigungen von mehr als 150 mm tritt beim Krümmen der Medienleitung das Problem auf, dass die Litze nicht der Biegung der Medienleitung folgt, sondern sich von dieser abhebt. Die günstigste Steigung als Kompromiss aus technischen und wirtschaftlichen Aspekten ist daher z.B. eine Steigung im Bereich von 40 bis 80 mm, insbesondere im Hinblick auf die Heizelement-Litzenlänge, die vorgesehen werden muss, und die technische Praktikabilität beim Umwickeln der rohrförmigen Medienleitung.

Zum Erzeugen einer gleichmäßigen Wärmeeinkopplung im Bereich des oder der Leitungsverbinder und der Medienleitung sowie des Übergangsbereichs zwischen Medienleitung und Leitungsverbinder kann eine angepasst unterschiedliche Steigung beim Bewickeln vorgesehen sein. Eine große Steigung von bis zu 150 mm kann entsprechend entlang der Medienleitung vorgesehen werden, wohingegen im Übergangsbereich zum Leitungsverbinder und entlang von diesem eine geringere Steigung sinnvoller erscheint, so dass der Wärmeeintrag über die gesamte Länge der beheizbaren Medienleitung hinweg etwa gleich gehalten oder an den Stellen, an denen ein besonders hoher Wärmeeintrag erforderlich ist, erhöht werden kann. Der Einfluss der Steigung der Litzen ist im Bereich der Medienleitung in Bezug auf den Materialeinsatz hoch, da die Medienleitung z.B. 4,5 m betragen kann, wohingegen der Einfluss im Bereich der Leitungsverbinder gering ist, da dort lediglich kurze Abmessungen umwickelt werden. Bezogen auf die Wärmeeinkopplung sind dies 15 Watt pro Meter bei der Medienleitung und 1,5 Watt pro Leitungsverbinder. Im Gegensatz zu der großen Steigung entlang der Medienleitung von insbesondere bis zu 150 mm kann entlang dem Leitungsverbinder z. B. eine Steigung von 3 mm vorgesehen sein.

Bei Vorsehen einer kleinen Steigung im Bereich des Leitungsverbinders kann eine spiralförmige und/oder mäandrierte Wicklung oder eine langgestreckte um die Leitungsverbinder herum vorgesehen werden. Auch Mischformen von mäandrierter, spiralförmiger oder auch langgestreckter Wicklung sowie unterschiedliche Wicklungen an Leitungsverbinder, Übergangsbereich und Medienleitung sind möglich.

Die Litzenstärke des Heizelementes bzw. dessen Durchmesser bzw. die Stärke der Seele des Heizelements, insbesondere der abisolierten metallischen Seele, kann weniger als 0,2 mm betragen, insbesondere 0,12 mm, 0,14 mm, 0,18 mm, jeweils ggf. mit eine Toleranz von ± 0,4 mm. Auch Zwischenwerte sind selbstverständlich möglich, also z.B. eine Litzenstärke von 0,10 mm, 0,11 mm, auch von weniger als 0,12 mm.

Die Medienleitung kann z.B. einen Innendurchmesser von 2 bis 4 mm, insbesondere einen Innendurchmesser von etwa 2 mm aufweisen. Das Vorsehen eines solchen Innendurchmessers erweist sich als besonders wirtschaftliche Variante. Die Wandstärke der rohrförmigen Medienleitung kann dabei z.B. 0,5 bis 1 mm betragen, insbesondere 0,7 mm. Der Luftspalt zwischen der Außenseite der rohrförmigen Medienleitung und einem diese sowie die um diese herum gewundenen Litzen umgebenden Innenseite des Wellrohres kann z.B. etwa 0,1 bis 0,4 mm, insbesondere 0,1 bis 0,2 bzw. 0,2 bzw. 0,2 bis 0,4 mm betragen. Ein solcher Luftspalt ist ausreichend, um eine gute Wärmedämmung zu ermöglichen. Zum Fixieren der Litzen des Heizelementes auf der Außenseite der rohrförmigen Medienleitung kann, wie bereits erwähnt, ein Klebeband, Gewebeklebe- oder Gewebeband vorgesehen werden. Grundsätzlich eignen sich auch andere Fixiermöglichkeiten, wobei sich das Umwickeln mit einem Klebe-, Gewebeklebe- oder Gewebeband als kostengünstig und bezüglich der Sicherheit der Fixierung ebenfalls als sehr gut erweist.

Die Litzen können zu einem durchgehenden Teil verbunden werden, wobei insbesondere zwei gleiche Litzen vorgesehen sind, die miteinander verbunden werden. Hierdurch wird eine durchgehende Litze bei Verbinden der beiden Litzen innerhalb des Leitungsverbinders erzeugt, so dass weitere Verbindungs- oder Crimpstellen vorteilhaft entfallen können. Derartige Crimpstellen von Heizelementen, insbesondere Heizdrähten, sind im Prinzip Sollbruchstellen, da sie insbesondere bei dauerhafter Beaufschlagung mit Querkräften zum Brechen neigen. Derartige Querkräfte treten bspw. durch Erschütterungen, Schwingungen und andere negative Beaufschlagungen beim Betrieb eines Fahrzeugs, insbesondere eines Lastkraftwagens, auf. Beim Brechen der Verbindungsstellen bzw. Crimpstellen tritt nicht nur ein Qualitätsproblem auf, sondern insbesondere bei schadhafter Isolation auch die Gefahr eines Kurzschlusses. Dies kann vorteilhaft durch das Vorsehen verbindungsstellenfreier Litzen vermieden werden. Hier erfolgt, wie bereits erwähnt, dann lediglich eine Verbindung an dem Leitungsverbinder, wobei die Litzen dort entweder miteinander an ihren Enden verbunden werden können oder mit Kaltleitern oder anderen Einrichtungen zum Verbinden mit einer Strom- oder Spannungsquelle.

Die Litzen können ferner unverbunden oder indirekt verbunden sein, insbesondere über eine weitere Leitung. Eine Leitung kann beispielsweise durch zwei Einzelleitungen in Reihe gebildet sein, wobei die gebildete Gesamtleitung dann drei Steckverbinder aufweisen kann. Ein Steckverbinder dient dann dem Anschluss an eine Strom- oder Spannungsquelle und zwei Steckverbinder der internen Verbindung der Leitungen miteinander. Hierbei könnte das Versehen von Kaltleitern zum Anschluss an eine Strom- oder Spannungsquelle vollständig entfallen.

Die Litzen können spiralförmig- und/oder mäandriert um den Leitungsverbinder herum gewickelt oder langgestreckt um den Leitungsverbinder herum angeordnet werden. Insbesondere beim Mäandrieren auf der Außenseite des Leitungsverbinders können Formelemente dort angeordnet werden, die das Mäandrieren unterstützen. Insbesondere können die Litzen in bzw. zwischen solche Formelemente eingeklemmt bzw. fixiert werden, um ihre Position beizubehalten.

Vorteilhaft kann das Heizelement bei Vorkonfektionieren der rohrförmigen Medienleitung adaptiv auf diese aufgewickelt und/oder adaptiv auf der Medienleitung und/oder dem Leitungsverbinder aufgebracht werden, insbesondere können die Litzen, ein Befestigungsmittel zum Befestigen der Litzen auf der Medienleitung und/oder eine Isolations- und/oder Schutzeinrichtung zur Isolation bzw. zum Schutz der Medienleitung und/oder des Leitungsverbinders und/oder des Übergangsbereichs zwischen Medienleitung und Leitungsverbinder adaptiv aufgebracht werden. Eine adaptive Aufbringung bedeutet das Vorsehen der Litzen angepasst an die jeweiligen Erfordernisse des Anwendungsfalls. Hierdurch wird nicht wie beim Stand der Technik eine bei der vorkonfektionierten Medienleitung dort vorgegebene Anordnung und Heizelementmenge verwendet. Vielmehr kann aufgrund des Umwickelns der Baugruppe zum Leiten eines Mediums nach deren Konfektionierung die Anordnung der Litzen genau an den Stellen erfolgen, an denen ein Wärmeeintrag in die Medienleitung und die Leitungsverbinder gewünscht wird bzw. erforderlich ist. Durch das adaptive Aufbringen des Heizelementes bzw. von dessen Litzen können Medienleitungen in verschiedenen Varianten angeboten werden. Insbesondere im Vergleich zu Litzen, die in die Wandung von Rohrleitungen als Medienleitungen integriert sind, kann eine Medienleitung beim adaptiven Aufbringen des Heizelementes bzw. von dessen Litzen mit unterschiedlichster Steigung und in unterschiedlichster Form bewickelt bzw. mit dem Heizelement versehen werden. Bei einem Einbetten von Litzen in die Rohrwandung der Medienleitung ist dieser Vorgang Bestandteil des Extrusionsprozesses der Medienleitung und es ist daher stets komplizierter und aufwendiger, diesen Vorgang zu variieren. Im Vergleich zum Einbetten von Litzen in die Rohrwandung der Medienleitung ist es ferner beim adaptiven Bewickeln bzw. Aufbringen des Heizelementes auf der Medienleitung möglich, eine vergleichsweise geringere Wandstärke der rohrförmigen Medienleitung vorzusehen, so dass ein geringerer Materialeinsatz erforderlich ist.

Somit wird eine beheizbare Medienleitung vorgesehen, bei der die Beheizung der Medienleitung selbst und von den mit dieser verbunden Leitungsverbindern über die Heizelemente bzw. Litzen erfolgt, die auf der vorkonfektionierten Medienleitung vorgesehen sind bzw. waren. Es können damit zahlreiche Verbindungsstellen der Litzen des Heizelementes vermieden werden. Ebenfalls vermieden werden kann das Vorsehen einer großen Variantenvielfalt von Litzen, die ansonsten bevorratet werden, um für die jeweiligen Anwendungsfälle auf Leitungsverbindern und rohrförmigen Medienleitungen bei der Vorkonfektionierung angeordnet zu werden. Demgegenüber kann nun eine Medienleitung bereits mit Heizelement versehen vorkonfektioniert werden, wobei eine vorteilhafte adaptive Aufbringung des Heizelementes auf der Medienleitung dazu führt, dass hierüber eine Anpassung an die gewünschte Wärmeleistung möglich ist. Durch das Vermeiden von Verbindungsstellen zwischen Litzen der Leitungsverbinder und den auf der Medienleitung aufgebrachten Litzen des Heizelementes kann ferner eine kompaktere Bauweise realisiert werden, da lediglich die bereits auf der Medienleitung angeordneten Litzen zu den Leitungsverbindern weitergeführt und zu deren Beheizung verwendet werden. Ferner erweist es sich als vorteilhaft, einen kontinuierlichen Bewicklungsprozess der Medienleitung mit Heizelement und Befestigungsmittel vorsehen zu können, da ein solcher kostengünstig, zugleich jedoch auch flexibel ist, da die kontinuierliche Bewicklung insbesondere auch im Hinblick auf die Steigung und das Vorsehen von abschnittsweise unterschiedlicher Steigung der Heizelementbewicklung auf der Medienleitung flexibel an jeweilige Anwendungsfälle angepasst werden kann. Es können somit verschiedene mit Heizelement und Befestigungsmittel versehene Medienleitungen auf Coils aufgewickelt bevorratet werden, bei denen insbesondere die Abstände der abschnittsweisen Heizelementbevorratung an den jeweiligen Verwendungszweck angepasst bemessen werden können.

Zur näheren Erläuterung der Erfindung werden im Folgenden Ausführungsbeispiele von dieser näher anhand der Zeichnungen beschrieben. Diese zeigen in:
- Figur 1a: eine Seitenansicht einer mit zwei Litzen eines Heizelements umwickelten und in einer ersten erfindungsgemäßen Bearbeitungsstufe abgelängten Medienleitung,
- Figur 1b: eine Seitenansicht der Medienleitung gemäß Figur 1a in einer zweiten erfindungsgemäßen Bearbeitungsstufe, wobei die Litzen endseitig von der Medienleitung in einem Abschnitt abgewickelt werden und die Medienleitung erneut abgelängt wird,
- Figur 1c: eine Seitenansicht der Medienleitung gemäß Figur 1a in einer dritten erfindungsgemäßen Bearbeitungsstufe, in der zwei Leitungsverbinder mit den Litzen bewickelt sind und ein Wellrohr sowie Schutzkappen aufgebracht sind,
- Figur 1d: eine Seitenansicht der fertig montierten erfindungsgemäßen beheizbaren Medienleitung,
- Figur 2a: eine Seitenansicht einer erfindungsgemäßen Medienleitung in einer zweiten Ausführungsform,
- Figur 2b: eine Seitenansicht der Medienleitung gemäß Figur 2a mit endseitig abgewickelten Litzen eines Heizelements,
- Figur 3: eine Seitenansicht eines erfindungsgemäß in Mäanderform mit Litzen versehenen Leitungsverbinders,
- Figur 4: eine Draufsicht auf ein erfindungsgemäßes Heizelement mit zwei miteinander verbundenen Litzen,
- Figur 4a: elektrisches Ersatzschaltbild des Heizelements mit Kaltleiteranschluss gemäß Figur 4,
- Figur 5: eine Draufsicht auf eine weitere Ausführungsform eines erfindungsgemäßen Heizelementes mit zwei Litzen, die jeweils endseitig mit Kaltleiteranschlüssen und Steckverbindern versehen sind,
- Figur 5a: elektrisches Ersatzschaltbild des Heizelements mit zwei endseitigen Kaltleiteranschlüssen gemäß Figur 5,
- Figur 6: eine Draufsicht auf eine weitere Ausführungsform einer erfindungsgemäßen fertig montierten beheizbaren Medienleitung mit offener Schutzkappe,
- Figur 7: eine Detailansicht des gewinkelten Leitungsverbinders gemäß Figur 6,
- Figur 8: eine Querschnittsansicht durch eine erfindungsgemäße beheizbare Medienleitung mit parallel entlang der Medienleitung geführter Litze, und
- Figur 9: ein Diagramm zur Darstellung einer optimalen Steigung, aufgetragen ist die Heizleiterlänge über der Steigung und die Leitungslänge.

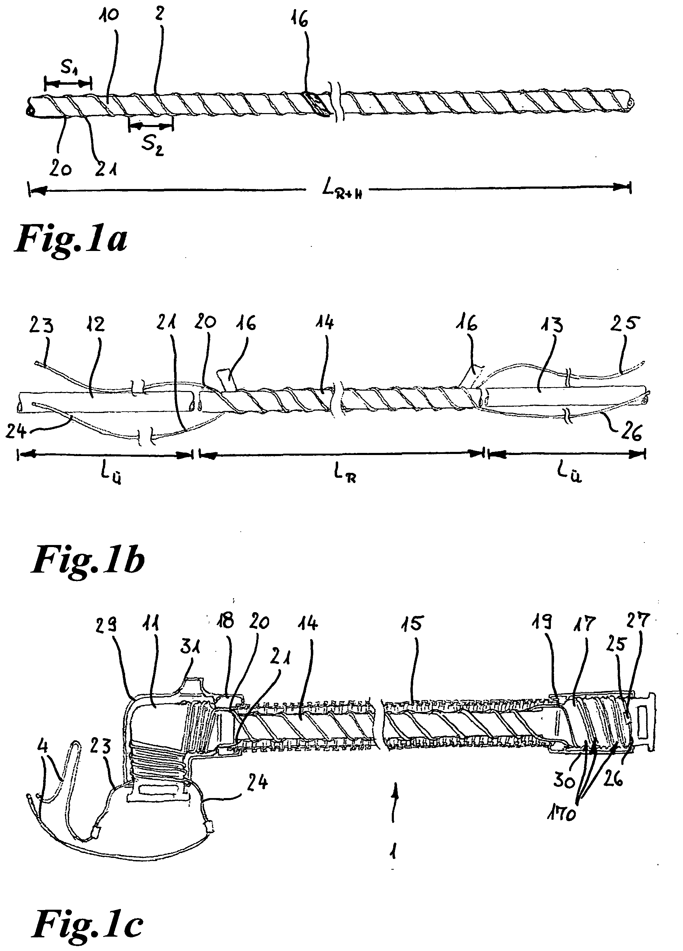

Figur 1a zeigt eine rohrförmige Medienleitung 10, die von einem Heizelement 2 umwickelt ist. Das Heizelement weist zwei Litzen 20, 21 auf. Die rohrförmige Medienleitung 10 mit den beiden darum gewickelten Litzen 20, 21 ist ein vorkonfektionierter Abschnitt einer langen aus einem kontinuierlichen Bewicklungsprozess einer rohrförmigen Leitung gewonnenen Medienleitung. Die erste Litze 20 ist mit einer Steigung S₁ und die zweite Litze 21 ist mit einer Steigung S₂ aufgewickelt, wobei beide Steigungen einander entsprechen oder ggf. auch leicht variieren können, um einen optimalen Wärmeeintrag in die Medienleitung zu ermöglichen. Die beiden Litzen werden durch ein Befestigungsmittel 16 auf der Außenfläche der Medienleitung 10 befestigt, wobei dieses Befestigungsmittel ein Klebe-, Gewebeklebe-, Gewebeband sein kann. In Figur 1a ist dies lediglich angedeutet.

Die rohrförmige Medienleitung 10 entsprechend Figur 1a ist auf eine Länge L_{R+H} abgelängt. Diese Länge entspricht der gewünschten Medienleitungslänge I_{R} zuzüglich der Länge, auf der die gewünschte Heizelementlänge I_{H} zum Umwickeln von Leitungsverbindern, mit denen die Medienleitung zum Anschließen an Aggregate etc. in einem Fahrzeug versehen wird, aufgewickelt ist. In Figur 1b sind die an beiden Enden der abgelängten Medienleitung 10 vorgesehenen Überlängen I_{Ü} bzw. Medienleitungsenden 12, 13 zu sehen. Die freien Heizelementenden bzw. die Litzenenden 23, 24, 25, 26 sind ebenfalls in Figur 1b gezeigt. Diese vier freien Litzenenden der beiden Litzen 20, 21 waren zuvor auf dem mit der Überlänge abgelängten Medienleitungsenden 12, 13 angeordnet. Nach dem Abwickeln der Litzenenden 23, 24, 25, 26 von den beiden Medienleitungsenden 12, 13 werden diese, wie in Figur 1b angedeutet, von dem mittleren Medienleitungsabschnitt 14 abgetrennt. Der mittlere Medienleitungsabschnitt 14 weist die gewünschte Medienleitungslänge I_{R} auf, die für den jeweiligen Anwendungsfall erforderlich ist. Bspw. kann die Medienleitungslänge I_{R} hier 4,5 m oder aber auch nur 0,2 m betragen. Dies ist abhängig von dem jeweiligen späteren Verwendungsort und Verwendungszweck der beheizbaren Medienleitung.

Nach dem Abtrennen der beiden Medienleitungsenden 12, 13 werden entsprechend die beiden endseitigen Schnittkanten des mittleren Medienleitungsabschnitts 14 gesäubert, sodass nachfolgend zunächst ein Wellrohr 15 axial auf die Medienleitung bzw. deren mittleren Medienleitungsabschnitt 14 aufgeschoben wird, wobei das Wellrohr den Medienleitungsabschnitt vollumfänglich umgibt. Nachfolgend wird an dem einen Ende des mittleren Medienleitungsabschnitts 14 ein erster Leitungsverbinder 11 und an dem anderen Ende ein zweiter Leitungsverbinder 17 angebracht, insbesondere durch Dornen, Laserschweißen oder ein anderes Fügeverfahren. Nach dem Verbinden des Medienleitungsabschnitts 14 mit den beiden Leitungsverbindern 17, 18, also nach dem Verbinden des "fluidischen" Teils der beheizbaren Medienleitung, also des Teils, durch den das Fluid strömen kann, werden die Litzenenden 23, 24 zum Umwickeln des ersten Leitungsverbinders 11 und die beiden Litzenenden 25, 26 zum Umwickeln des zweiten Leitungsverbinders 17 verwendet. In den Übergangsbereichen 18, 19 von dem mittleren Medienleitungsabschnitt 14 zu den beiden Leitungsverbindern 11, 17 sind somit keine Crimpstellen der Litzen mehr vorgesehen. Vielmehr werden die Litzen 20, 21 durchgängig von der Medienleitung weiter über die beiden Leitungsverbinder hinweg gewickelt bzw. angeordnet. Die Steigung der Wicklung kann dabei an den beiden Leitungsverbindern 11, 17 im Vergleich zur Medienleitung variieren. Wie in Figur 1c zu sehen, ist entlang der Medienleitung eine etwa gleichbleibende Steigung der Wicklung der beiden Litzen 20, 21 vorgesehen, in den beiden Übergangsbereichen 18, 19 sind die beiden Litzen 20, 21 etwa parallel geführt und auf den beiden Leitungsverbindern 11, 17 ist eine sehr viel geringere Steigung der gewickelten Litzen vorgesehen, wobei sich diese bei den beiden Leitungsverbindern 11, 17 ferner noch unterscheidet.

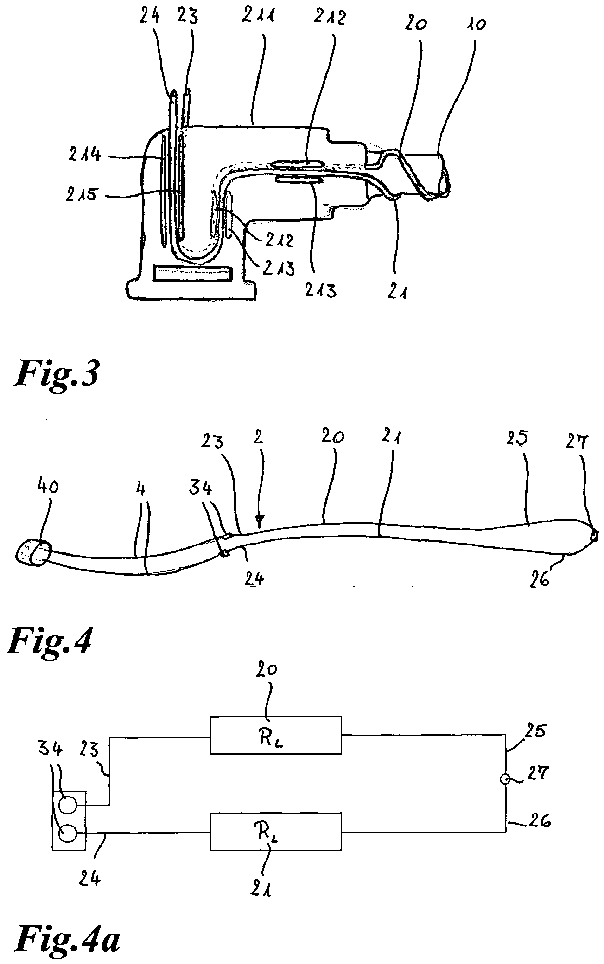

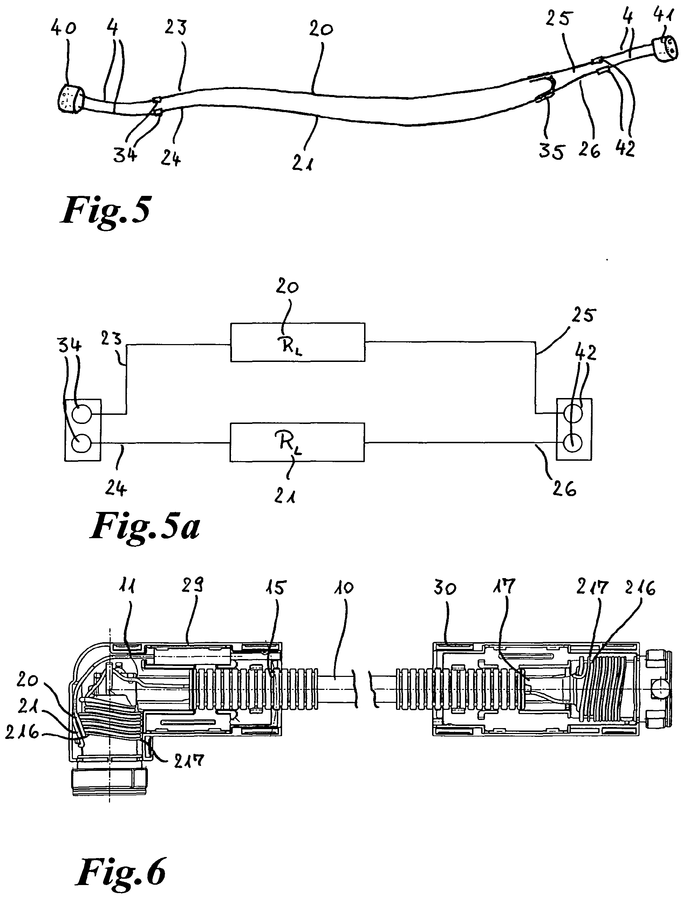

Die jeweiligen Litzenenden 23, 24, 25, 26 können beispielsweise mit Kaltleitern 4 verbunden werden, die zum Anschluss an eine Strom- oder Spannungsquelle dienen. Dies ist bei dem ersten Leitungsverbinder 11 sowie für alle Litzenenden in Figur 5 angedeutet. Ferner können die Litzenenden auch miteinander verbunden werden, wie durch die Crimpstelle 27 auf dem zweiten Leitungsverbinder 17 und in Figur 4 angedeutet. Hierdurch entsteht eine geschlossene Schleife der beiden Litzen 20, 21, die dann lediglich noch zwei offene Enden, nämlich die beiden Litzenenden 23, 24 aufweist, die mit Kaltleitern 4 verbunden werden, wie in Figur 1c zu sehen.

Die Litzenenden 23, 24, 25, 26 können auf der Außenseite der Leitungsverbinder 11, 17 durch Formelemente gehalten werden, wie dies in Figur 1c angedeutet ist.

Ferner kann die Außenfläche der Leitungsverbinder mit einer entsprechenden Strukturierung versehen sein, wie einer Rippenstruktur 170 oder einer Formelemente bildenden Struktur. Es können also Rippen sowie Rillen oder Nuten vorgesehen werden, in die die Litzenenden eingelegt werden können. Hierdurch wird eine stabile Positionierung ermöglicht. Ebenfalls ist es möglich, auch zusätzlich zu dem Einlegen in bzw. zwischen Formelemente eine Fixierung bzw. Befestigung durch Vorsehen eines Befestigungsmittels wie des Klebe-, Gewebeklebe-, Gewebebandes 16 vorzusehen, das entlang der Medienleitung ebenfalls die Positionierung der Litzen 20, 21 des Heizelementes 2 fixiert.

Wie Figur 1c weiter entnommen werden kann, werden nach dem Umwickeln der Leitungsverbinder 11, 17 mit den Litzen 20, 21 Schutzkappen 29, 30 zum Schutz und zur Isolation auf den beiden Leitungsverbindern 11, 17 sowie überdeckend die beiden Übergangsbereiche 18, 19 zu dem Medienleitungsabschnitt 14 und auch überdeckend einen Teil des Wellrohres 15 vorgesehen. Durch den zwischen der jeweiligen Außenseite der Leitungsverbinder bzw. der Übergangsbereiche bzw. des Wellrohres und der jeweiligen Innenseite der Schutzkappen Luftspalt oder Luftraum ist eine gute Isolation möglich. Da die beiden Leitungsverbinder 11, 17 unterschiedlich geformt sind, nämlich der Leitungsverbinder 11 eine Winkelform aufweist, wohingegen der Leitungsverbinder 17 gerade geformt ist, sind auch entsprechend unterschiedlich geformte Schutzkappen 29, 30 hier zum Schutz sowie zur Isolierung vorgesehen.

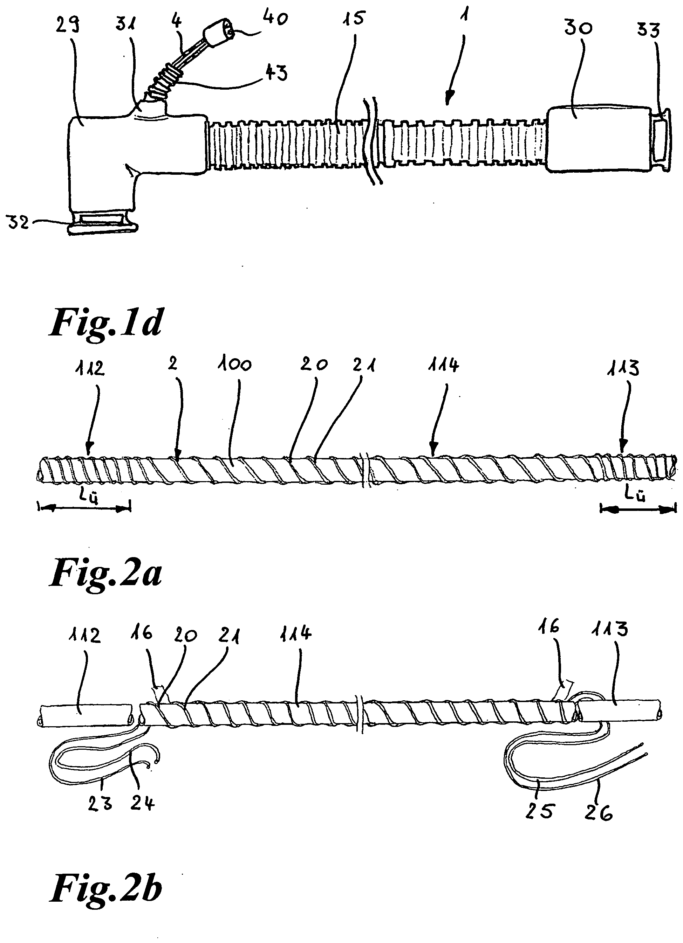

Die Schutzkappe 29 weist einen Abzweigstutzen 31 auf, durch den die Kaltleiter 4 auf die Außenseite der Schutzkappe 29 geführt werden können. An den Abzweigstutzen kann sich eine Ummantelungseinrichtung der Kaltleiter anschließen bzw. teilweise darin aufgenommen sein, wie z.B. ein Wellrohr 43. Hier ist somit ein knicksicheres und stabiles Herausführen der Kaltleiter zum Anschließen des Heizelementes an eine Strom- oder Spannungsquelle möglich. Dies ist in Figur 1d zu sehen, wobei die Kaltleiter zum Anschluss an eine Strom- oder Spannungsquelle mit einem entsprechenden Steckverbinder 40 versehen sind. Wie Figur 1d ferner entnommen werden kann, weisen die beiden Schutzkappen 29, 30 jeweils endseitig Verbindungsöffnungen 32, 33 zum Einfügen von Halteelementen zum Rückhalten eines darin eingefügten Steckers oder Steckverbinders zum Verbinden mit einem Aggregat oder anderen Leitungen auf.

Figur 2a zeigt eine Seitenansicht einer anderen Ausführungsvariante der vorkonfektionierten Medienleitung. Diese Medienleitung 100 weist eine Umwicklung mit den beiden Litzen 20, 21 des Heizelementes 2 auf, wobei die Steigung dieser Umwicklung über die Länge der Medienleitung hinweg variiert. An den beiden Medienleitungsenden 112, 113 ist jeweils eine geringere Steigung der Bewicklung vorgesehen als im mittleren Medienleitungsabschnitt 114. Es ist hier somit eine selektive Bewicklung bzw. Bevorratung von Litzen vorgesehen, wobei die Medienleitung 100 so vorkonfektioniert wird, dass jeweils abschnittsweise die Litzen mit einer geringeren Steigung gewickelt werden, um einen ausreichenden Vorrat - nach dem Abtrennen von Medienleitungsstücken zum Weiterkonfektionieren zu einer beheizbaren Medienleitung - für das Umwickeln von Leitungsverbindern zu haben. Der Vorteil dieser Ausführungsvariante gegenüber der in den Figuren 1a und 1b gezeigten ist, dass die Medienleitungsenden 112 und 113 kürzer sind als die Medienleitungsenden 12 und 13, so dass Material, also Medienleitung, hier eingespart werden kann.

Die weitere Konfektionierung einer solchen vorkonfektionierten Medienleitung erfolgt dahingehend, dass ein Abtrennen immer in dem Bereich der geringeren Wicklungssteigung erfolgt, so dass lediglich kürzere Rohrleitungsteile der rohrförmigen Medienleitung 100 abgetrennt und weggeworfen werden müssen im Vergleich zu der Lösung nach Figur 1a, bei der die abzutrennenden und wegzuwerfenden Medienleitungsenden 12, 13 größer sind als die Medienleitungsenden 112, 113 gemäß Figur 2b. Die jeweilige Überlänge I_{Ü} ist somit bei der Ausführungsform nach Figur 2a geringer als bei der Ausführungsform nach Figur 1b. Aufgrund der Wicklung mit geringerer Steigung kann mehr Litzenlänge auf geringerer Medienleitungslänge untergebracht werden.

Die weitere Konfektionierung der Medienleitung 100 bzw. des mittleren Medienleitungsabschnitts 114 gemäß Figur 2b kann wie zu den Figuren 1a bis 1d beschrieben erfolgen.

Figur 3 zeigt eine Seitenansicht einer weiteren Ausführungsform eines Leitungsverbinders 211. Der Leitungsverbinder ist mit einer Winkelform und außenseitig mit Formelementen 212, 213, 214, 215 versehen, die zum Halten der Litzen 20, 21 auf der Außenseite des Leitungsverbinders 211 dienen. Die Litzenenden 23, 24 sind von der mit dem Leitungsverbinder 211 verbundenen rohrförmigen Medienleitung 10 zunächst parallel geführt durch zwei parallel zueinander angeordnete Formelemente 212, 213. Zum Mäandrieren sind die beiden Litzen auf beiden einander gegenüberliegenden Seiten des Leitungsverbinders 211 sodann in einem Winkel gelegt und durch zwei weitere Formelemente 212, 213 hindurchgeführt, zu einer 180 °-Schleife gelegt und durch zwei weitere Formelemente 214, 215 hindurchgeführt.

Anstelle der dargestellten Positionierung der beiden Litzen 20, 21 bzw. der Litzenenden 23, 24 kann auch eine anderweitige mäandrierte und/oder wellenförmige und/oder spiralförmige und/oder Parallelführung der Litzenenden vorgesehen werden. Die jeweilige Wahl des Weges der beiden Litzenenden wird vorteilhaft von dem gewünschten Wärmeeintrag zum Erwärmen des durch den Leitungsverbinder 211 im Betrieb strömenden Mediums gewählt. Dasselbe gilt auch für die Steigung entlang der Medienleitung. Beispielsweise kann bei der Ausführungsform gemäß Figur 1c bei einer beheizbaren Medienleitung 1 im ersten Leitungsverbinder 11 eine Wärmeeinbringung mit 1,5 ± 0,5 Watt elektrischer Leistung pro Leitungsverbinder bei einer aufzubringenden Litzenlänge von 300 ± 100 mm, wobei beide Litzenenden 23, 24 hier in Summe betrachtet werden, vorgesehen werden. Bei dem zweiten Leitungsverbinder 17 kann ebenfalls eine Wärmeeinbringung mit 1,5 ± 0,5 Watt bei einer aufzubringenden Litzenlänge von 300 ± 100 mm pro Leitungsverbinder vorgesehen werden. Die zwischen den beiden Leitungsverbindern 11, 17 angeordnete rohrförmige Medienleitung bzw. der mittlere Medienleitungsabschnitt 14, 114 kann demgegenüber eine Wärmeeinbringung bzw. elektrische Leistung von 15 ± 5 Watt pro Meter Leitungslänge bei einer aufzubringenden Litzenlänge von 2000 bis 3000 mm, insbesondere 2200 bis 2400 mm pro Meter Leitungslänge aufweisen, wobei auch hier wiederum beide Litzen 20, 21 in Summe betrachtet werden.

In Figur 4 ist eine Draufsicht auf das Heizelement 2 gezeigt mit den beiden miteinander verbundenen Litzen 20, 21. Die Verbindungs- bzw. Crimpstelle 27, wie sie auch in Figur 1c zu sehen ist, ist hier ebenfalls gezeigt. Nachdem keine weitere Crimpstelle erforderlich ist, sind in dem elektrischen Blockschaltbild in Figur 4a hier auch keine weiteren Verbindungs- oder Crimpstellen gezeigt. Es sind somit lediglich die Widerstände der beiden Litzen 20, 21 zu berücksichtigen. Die beiden Verbindungsstellen 34 zu den Kaltleitern 4, die mit dem Steckverbinder 40 verbunden sind, sind an den Litzenenden 23, 24 vorgesehen, die beiden Litzenenden 25, 26 über die Crimpstelle 27 miteinander verbunden.

Bei dem in Figur 5 gezeigten Heizelement sind alle Litzenenden 23, 24 sowie 25, 26 offen gelassen und mit entsprechenden Kaltleitern 4 verbunden, die ihrerseits mit jeweiligen Steckverbindern 40, 41 verbunden sind, um in eine elektrische Strom- oder Spannungsquelle eingesteckt werden zu können. Um die beiden Litzen 20, 21 im Leitungsverbinder festlegen zu können, ist ein Bügelelement 35 vorgesehen. Dieses ist sowohl mit der Litze 20 als auch mit der Litze 21 verbunden, wie dies Figur 5 entnommen werden kann. Aufgrund der Bügelform des Bügelelementes 35 ist es möglich, dieses beispielsweise an einem Aufnahmezapfen des Leitungsverbinders festzulegen, also den Aufnahmezapfen mit dem Bügelelement zu umschlingen. Die sich außerhalb des Bügelelements erstreckenden Litzenenden 25, 26 der beiden Litzen 20, 21 mit den angeschlossenen Kaltleitern 4 können ebenso wie die gegenüberliegenden Enden der beiden Litzen als Abzweigleitungen aus der beheizbaren Medienleitung herausgeführt werden. Dies entspräche dann der in Figur 1d gezeigten Ausführungsvariante, wobei durch das geschützte Herausführen der Kaltleiter aus der Schutzkappe die Verbindung zwischen Kaltleiter und Heizelement bzw. Litzen fixiert und gegen Erschütterungen, die beispielsweise im Betrieb insbesondere beim Einbau in einen Lastkraftwagen vorkommen können, nicht mehr zu einem ungewollten Lösen des Heizelementes von dem Kaltleiter führen bzw. dies so gut wie möglich vermieden werden kann.

Anstelle des Vorsehens von mit den Litzenenden verbundenen Kaltleitern können grundsätzlich auch die Litzenenden selbst in einen Steckverbinder 40, 41 geführt und durch diese direkt an eine Strom- oder Spannungsquelle angeschlossen werden. Ferner kann ein solcher Anschluss auch direkt im Leitungsverbinder oder der Schutzkappe integriert sein.

Wie dem Ersatzschaltbild in Figur 5a zu entnehmen ist, sind bei der Parallelschaltung der beiden Litzen 20, 21 lediglich die vier Verbindungsstellen 34, 42 zu den vier Kaltleitern vorgesehen, jedoch keine weiteren Crimpstellen.

Beim Bewickeln der Medienleitung kann die Steigung über die Längserstreckung der Medienleitung hinweg leicht variieren, was sich durch Ausschöpfen des Toleranzbereichs und Vorsehen einer Steigung innerhalb einer Toleranz ergibt. Ebenfalls ist es möglich, beim kontinuierlichen Bewickeln von einem Ende der Medienleitung zum anderen eine bewusste Varianz der Steigung vorzusehen, zum Schaffen eines Heizelementvorrates oder aber auch zum Erzeugen eines über die Längserstreckung der Medienleitung hinweg unterschiedlichen Wärmeeintrags in diese. Je nachdem, an welcher Stelle ein besonders großer Wärmeeintrag gefordert wird, kann partiell eine variable Steigung bzw. eine geringere Steigung bei höherem gewünschten Wärmeeintrag vorgesehen werden.

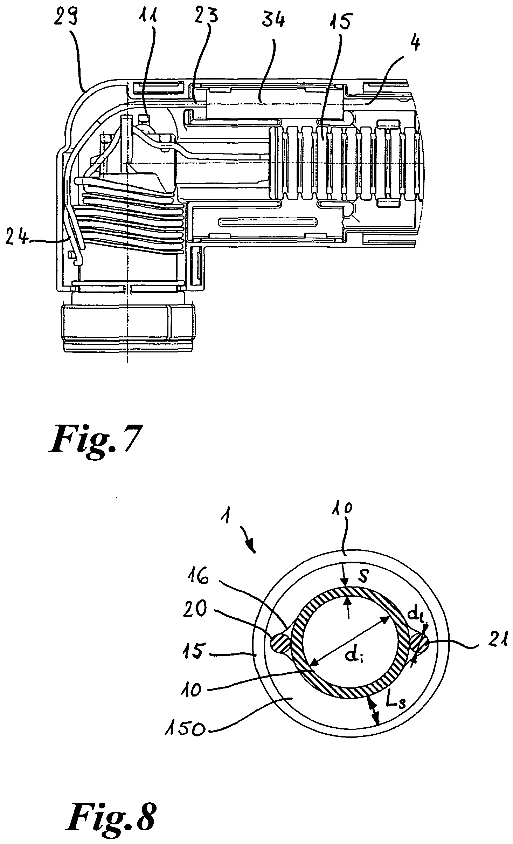

Wie besonders gut den Figuren 6 und 7 zu entnehmen ist, können die Litzen 20, 21 in Wickelnuten 216 auf der Außenseite des oder der Leitungsverbinder 11, 17 geführt werden. Die Wickelnuten werden durch vorstehende Rippen 217 oder Formelemente auf der Außenseite des Leitungsverbinders begrenzt bzw. gebildet. Hierdurch ist eine eindeutige Positionierung der Litzen auf der Außenseite der Leitungsverbinder möglich, so dass eine Fixierung durch ein Klebe-, Gewebeklebe- oder Gewebeband, wie dies entlang der Medienleitung vorgesehen ist, hier entfallen kann. Sind derartige Wickelnuten nicht vorgesehen, kann selbstverständlich auch im Bereich des Leitungsverbinders 11, 17 eine Fixierung der Litze oder Litzen des Heizelementes 2 durch beispielsweise ein Klebe-, Gewebeklebe- oder Gewebeband oder eine anderweitige Fixiereinrichtung erfolgen.

Figur 8 zeigt einen Querschnitt durch die fertig montierte beheizbare Medienleitung 1 im Bereich der rohrförmigen Medienleitung 10, wobei die beiden Litzen 20, 21 des Heizelementes 2 an dieser Stelle auf einander gegenüberliegenden Seiten der rohrförmigen Medienleitung 10 angeordnet sind. Die Fixierung der Litze durch das Klebe-, Gewebeklebe- oder Gewebeband 16 ist ebenso angedeutet wie die Ummantelung mit dem Wellrohr 15. Der Innendurchmesser dᵢ der rohrförmigen Medienleitung 10 kann beispielsweise zwischen 2 und 4 mm betragen, insbesondere 2 bis 3 mm. Die Wandstärke s der rohrförmigen Medienleitung 10 kann 0,5 bis 1 mm betragen, insbesondere 0,7 mm. Die Litze 21 kann einen Durchmesser von d_{I} = 0,12 bis 0,18, insbesondere 0,14 mm betragen. Der zwischen der Außenseite der Medienleitung 10 und der Innenseite des Wellrohres 15 verbleibende Luftspalt 150 kann L_{S} zwischen 0,1 und 0,4 mm betragen, insbesondere 0,2 mm, wobei aufgrund des Vorsehens des Wellrohres in den Wellenbergen jeweils ein größerer Luftspalt vorgesehen ist als in den Wellentälern.

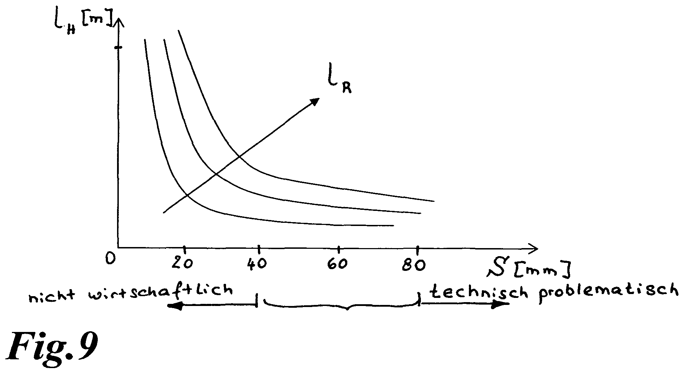

Wie das Diagramm in Figur 9 zeigt, kann die Steigung S, im Diagramm in mm angegeben, in Abhängigkeit von der Heizelementlänge I_{H}, die in dem Diagramm in Figur 9 in Metern angegeben ist, und von der Länge I_{R} der Medienleitung variiert werden, wobei die Länge der Medienleitung in Pfeilrichtung zunimmt. Eine Steigung auf der Medienleitung im Bereich zwischen 20 und 150 mm ist wirtschaftlich und technisch möglich, wobei eine Steigung im Bereich von 40 bis 80 mm sich als der günstigste Bereich erweist. Dies gilt sowohl beim Vorsehen eines Heizelementes mit einer Litze als auch eines Heizelementes mit zwei parallel zueinander geführten gleichen Litzen, wobei endseitig null bis vier Kaltleiter bzw. Zuleiter an dem Heizelement angeordnet werden können.

Neben den im Vorstehenden genannten und in den Figuren gezeigten Ausführungsvarianten von beheizbaren Medienleitungen können noch zahlreiche weitere gebildet werden, bei denen jeweils die Litzen des Heizelementes sich verbindungsstellenfrei im Übergangsbereich zwischen Medienleitung und Leitungsverbinder und durchgängig entlang dem Leitungsverbinder und der Medienleitung auf deren jeweiliger Außenseite erstrecken. Bei der Herstellung einer solchen beheizbaren Medienleitung wird dabei die Medienleitung zunächst kontinuierlich mit dem Heizelement bewickelt und das Heizelement auf der Medienleitung durch zumindest ein Befestigungsmittel befestigt oder fixiert vorkonfektioniert, die Medienleitung anwendungsspezifisch in einer Länge abgelängt, die der gewünschten Medienleitungslänge zuzüglich zum Umwickeln des zumindest einen Leitungsverbinders und des Übergangsbereichs erforderlichen Heizelementlänge entspricht, das Befestigungsmittel in den Bereich außerhalb der gewünschten Medienleitungslänge entfernt, das Heizelement von der Medienleitung abgewickelt, die Medienleitung in der gewünschten Medienleitungslänge abgelängt, die Medienleitung mit dem zumindest einen Leitungsverbinder verbunden und zumindest der zumindest eine Leitungsverbinder mit dem Heizelement umwickelt.

### Bezugszeichenliste

- 1: Beheizbare Medienleitung
- 2: Heizelement
- 4: Kaltleiter
- 10: rohrförmige Medienleitung
- 11: erster Leitungsverbinder
- 12: Medienleitungsende
- 13: Medienleitungsende
- 14: mittlerer Medienleitungsabschnitt
- 15: Wellrohr
- 16: Befestigungsmittel/Klebe-, Gewebeklebe-, Gewebeband
- 17: zweiter Leitungsverbinder
- 18: Übergangsbereich
- 19: Übergangsbereich
- 20: erste Litze
- 21: zweite Litze
- 23: Litzenende
- 24: Litzenende
- 25: Litzenende
- 26: Litzenende
- 27: Crimpstelle
- 28: Formelement
- 29: Schutzkappe
- 30: Schutzkappe
- 31: Abzweigstutzen
- 32: Öffnung
- 33: Öffnung
- 34: Verbindungsstelle
- 35: Bügelelement
- 40: Steckverbinder
- 41: Steckverbinder
- 42: Verbindungsstelle
- 43: Wellrohr
- 100: Medienleitung
- 112: Medienleitungsende
- 113: Medienleitungsende
- 114: mittlerer Medienleitungsabschnitt
- 150: Luftspalt
- 170: Rippenstruktur
- 211: Leitungsverbinder
- 212: Formelement
- 213: Formelement
- 214: Formelement
- 215: Formelement
- 216: Wickelnut
- 217: Rippe
- R_{L}: Widerstand Heizelement
- S: Steigung
- S₁: Steigung Litze 20
- S₂: Steigung Litze 21
- I_{H}: Heizelementlänge
- I_{R}: Medienleitungslänge
- L_{R+H}: verlängerte Medienleitungslänge
- I_{Ü}: Überlänge
- s: Wandstärke Medienleitung
- dᵢ: Innendurchmesser von 10
- dₗ: Durchmesser Litze
- s: Wandstärke
- L_{S}: Luftspaltstärke

## Patentansprüche

1. Verfahren zum Herstellen einer beheizbaren Medienleitung (1), umfassend eine Medienleitung (10), zumindest einen Leitungsverbinder (11,17,211), einen Übergangsbereich (18,19) zwischen Medienleitung (10) und Leitungsverbinder (11,17,211) und zumindest ein Heizelement (2), wobei das Heizelement (2) wenige Litzen (20,21), insbesondere zwei Litzen, aufweist, wobei eine rohrförmige Medienleitung kontinuierlich mit dem Heizelement bewickelt und das Heizelement auf der Medienleitung durch zumindest ein Befestigungsmittel (16) befestigt oder fixiert vorkonfektioniert wird, die Medienleitung anwendungsspezifisch in einer ersten Länge abgelängt wird, die der gewünschten Medienleitungslänge (I_{R}) zuzüglich der zum Umwickeln des zumindest einen Leitungsverbinders (11,17,211) und des Übergangsbereichs (18,19) erforderlichen Heizelementlänge (I_{H}) entspricht, das Befestigungsmittel (16) in dem Bereich (12,13,112,113) außerhalb der gewünschten Medienleitungslänge (I_{R}) entfernt wird,
das Heizelement (2) von dem in erster Länge abgelängten Medienleitungsabschnitt abgewickelt wird,
die Medienleitung in der gewünschten Medienleitungslänge (I_{R}) zu einem zweiten Medienleitungsabschnitt (14,114) abgelängt wird,
der Medienleitungsabschnitt (14,114) als Medienleitung (10) mit dem zumindest einen Leitungsverbinder (11,17,211) verbunden wird, und zumindest der zumindest eine Leitungsverbinder (11,17,211) mit dem Heizelement umwickelt wird.

2. Verfahren nach Anspruch 1,
**dadurch gekennzeichnet, dass**
vor dem Verbinden des Medienleitungsabschnitts (14,114) mit dem zumindest einen Leitungsverbinder (11,17,211) zumindest eine Einrichtung (15) zum Schutz und/oder zur Isolation der Medienleitung (10) um diese herum angeordnet wird, insbesondere ein Wellrohr axial auf diese aufgeschoben wird.

3. Verfahren nach Anspruch 1 oder 2,
**dadurch gekennzeichnet, dass**
die offenen Enden (23,24,25,26) des Heizelements (2) direkt oder indirekt mit einem Einspeiseverbinder (40,41) zum Anschließen an einer Strom- oder Spannungsquelle verbunden werden.

4. Verfahren nach einem der Ansprüche 1 oder 2,
**dadurch gekennzeichnet, dass**
die offenen Enden (23,24,25,26) des Heizelements (2) miteinander verbunden werden, insbesondere im Bereich des Leitungsverbinders (11,17,211).

5. Verfahren nach einem der Ansprüche 1 bis 4,
**dadurch gekennzeichnet, dass**
zumindest eine Einrichtung (29,30) zum Schutz und/oder zur Isolation des Leitungsverbinders (11,17,211) und/oder des Übergangsbereichs (18,19) zwischen Medienleitung (10) und Leitungsverbinder (11,17,211) um diese herum angeordnet wird, insbesondere Schutzkappen (29,30) zur Ummantelung des zumindest einen Leitungsverbinders (11,17,211) und des zumindest einen Übergangsbereichs (18,19) zu der Medienleitung (10) diese und/oder die diese umgebende Schutz- und Isoliereinrichtung (15) umgebend angeordnet werden.

6. Verfahren nach einem der Ansprüche 1 bis 5,
**dadurch gekennzeichnet, dass**
das Heizelement (2) über die Längserstreckung der rohrförmigen vorkonfektionierten Medienleitung hinweg mit abschnittsweise unterschiedlicher Steigung auf diese aufgewickelt wird.

7. Verfahren nach einem der Ansprüche 1 bis 6,
**dadurch gekennzeichnet, dass**
das Heizelement (2) bei Vorkonfektionieren der rohrförmigen Medienleitung adaptiv auf diese aufgewickelt wird und/oder dass das Heizelement (2) adaptiv auf der Medienleitung und/oder dem Leitungsverbinder (11,17) aufgebracht wird.

8. Beheizbare Medienleitung (1), hergestellt nach dem Verfahren nach einem der vorstehenden Ansprüche, mit einer rohrförmigen Medienleitung (10), zumindest einem Leitungsverbinder (11,17,211), einem Übergangsbereich (18,19) zwischen rohrförmiger Medienleitung (10) und Leitungsverbinder (11,17,211) und zumindest einem Heizelement (2), wobei das Heizelement (2) wenige Litzen (20,21), insbesondere zwei Litzen, aufweist, wobei sich ein und dieselben Litzen (20,21) durchgängig sowohl entlang der rohrförmigen Medienleitung (10) als auch entlang dem zumindest einen Leitungsverbinder (11,17,211) erstrecken, wobei die rohrförmige Medienleitung (10) eine mit den Litzen (20,21) vorkonfektionierte rohrförmige Medienleitung ist und die Beheizung der rohrförmigen Medienleitung (10) selbst und von den mit dieser verbundenen Leitungsverbindern (11,17,211) über die auf der vorkonfektionierten rohrförmigen Medienleitung vorgesehenen Litzen (20,21) erfolgt.

9. Beheizbare Medienleitung (1) nach Anspruch 8,
**dadurch gekennzeichnet, dass**
die Litzen (20,21) sich verbindungsstellenfrei im Übergangsbereich (18,19) zwischen Medienleitung (10) und Leitungsverbinder (11,17,211) und durchgängig entlang dem Leitungsverbinder (11,17,211) und der Medienleitung (10) auf deren jeweiliger Außenseite erstrecken.

10. Beheizbare Medienleitung (1) nach Anspruch 8 oder 9,
**dadurch gekennzeichnet, dass**
die Litzen spiralförmig und/oder mäandriert um den Leitungsverbinder (11,17,211) herum gewickelt oder langgestreckt um den Leitungsverbinder (11,17,211) herum angeordnet sind.

11. Beheizbare Medienleitung nach Anspruch 8, 9 oder 10,
**dadurch gekennzeichnet, dass**
das Heizelement (2) adaptiv auf der Medienleitung (10) und/oder dem Leitungsverbinder (11,17,211) aufgebracht ist, insbesondere die Litzen (20,21), zumindest ein Befestigungsmittel (16) zum Befestigen der Litzen auf der Medienleitung (10) und/oder eine Isolations- und/oder Schutzeinrichtung (15,29,30) zur Isolation und/oder zum Schutz der Medienleitung (10) und/oder des Leitungsverbinders (11,17,211) und/oder eines Übergangsbereichs (18,19) zwischen Medienleitung (10) und Leitungsverbinder (11,17,211) adaptiv aufgebracht sind.

12. Beheizbare Medienleitung (1) nach Anspruch 8,9, 10 oder 11,
**dadurch gekennzeichnet, dass**
die Litzen (20,21) zu einem durchgehenden Teil verbunden sind, insbesondere zwei gleiche Litzen vorgesehen sind.

13. Beheizbare Medienleitung (1) nach einem der Ansprüche 8 bis 12,
**dadurch gekennzeichnet, dass**
die Litzen (20,21) unverbunden oder indirekt verbunden sind, insbesondere über eine weitere Leitung.

## Claims

1. Method for producing a heatable media line (1), comprising a media line (10), at least one line connector (11, 17, 211), a transition region (18, 19) between the media line (10) and the line connector (11, 17, 211) and at least one heating element (2), wherein the heating element (2) has a small number of wires (20, 21), in particular two wires,
wherein
the heating element is wound continuously around a tubular media line and the heating element is prefabricated fastened or fixed to the media line by at least one fastening means (16),
the media line is cut to a first application-specific length which corresponds to the desired media line length (I_{R}) plus the heating element length (I_{H}) required for winding around the at least one line connector (11, 17, 211) and the transition region (18, 19),
the fastening means (16) is removed in the region (12, 13, 112, 113) outside the desired media line length (I_{R}),
the heating element (2) is unwound from the media line portion cut to the first length,
the media line is cut to the desired media line length (I_{R}) to form a second media line portion (14, 114),
the media line portion (14, 114) is connected as the media line (10) to the at least one line connector (11, 17, 211), and
the heating element is wound around at least the at least one line connector (11, 17, 211).

2. Method according to claim 1,
**characterised in that**
before the media line portion (14, 114) is connected to the at least one line connector (11, 17, 211), at least one device (15) for protecting and/or insulating the media line (10) is arranged around the media line, in particular a corrugated pipe is pushed axially onto the media line.

3. Method according to claim 1 or 2,
**characterised in that**
the open ends (23, 24, 25, 26) of the heating element (2) are connected directly or indirectly to a feed connector (40, 41) for connection to a current or voltage source.

4. Method according to either claim 1 or claim 2,
**characterised in that**
the open ends (23, 24, 25, 26) of the heating element (2) are connected together, in particular in the region of the line connector (11, 17, 211).

5. Method according to any one of claims 1 to 4,
**characterised in that**
at least one device (29, 30) for protecting and/or insulating the line connector (11, 17, 211) and/or the transition region (18, 19) between the media line (10) and the line connector (11, 17, 211) is wound around the media pipe, in particular protective caps (29, 30) for sheathing the at least one line connector (11, 17, 211) and the at least one transition region (18, 19) to the media line (10) are arranged surrounding the media line and/or the protecting and insulating device (15) surrounding it.

6. Method according to any one of claims 1 to 5,
**characterised in that**
the heating element (2) is wound onto the tubular prefabricated media line over the longitudinal extent thereof with a pitch which varies in regions.

7. Method according to any one of claims 1 to 6,
**characterised in that**
the heating element (2) is adaptively wound onto the tubular media line during the prefabrication thereof and/or **in that** the heating element (2) is adaptively applied to the media line and/or the line connector (11, 17).

8. Heatable media line (1), produced by the method according to any one of the preceding claims, having a tubular media line (10), at least one line connector (11, 17, 211), a transition region (18, 19) between the tubular media line (10) and the line connector (11, 17, 211) and at least one heating element (2), wherein the heating element (2) has a small number of wires (20, 21), in particular two wires,
wherein
the same wire or wires (20, 21) extend continuously both along the tubular media line (10) and along the at least one line connector (11, 17, 211), wherein the tubular media line (10) is a tubular media line prefabricated with the wires (20, 21) and heating of the tubular media line (10) itself and of the line connectors (11, 17, 211) connected thereto takes place *via* the wires (20, 21) provided on the prefabricated tubular media line.

9. Heatable media line (1) according to claim 8,
**characterised in that**
the wires (20, 21) extend without connecting points in the transition region (18, 19) between the media line (10) and the line connector (11, 17, 211) and continuously along the line connector (11, 17, 211) and the media line (10) on the outside of each thereof.

10. Heatable media line (1) according to claim 8 or 9,
**characterised in that**
the wires are wound around the line connector (11, 17, 211) in a spiral and/or meandering form or are arranged stretched out around the line connector (11, 17, 211).

11. Heatable media line according to claim 8, 9 or 10,
**characterised in that**
the heating element (2) is adaptively applied to the media line (10) and/or the line connector (11, 17, 211), in particular the wires (20, 21), at least one fastening means (16) for fastening the wires to the media line (10) and/or an insulating and/or protecting device (15, 29, 30) for insulating and/or for protecting the media line (10) and/or the line connector (11, 17, 211) and/or a transition region (18, 19) between the media line (10) and the line connector (11, 17, 211) are adaptively applied.

12. Heatable media line (1) according to claim 8, 9, 10 or 11,
**characterised in that**
the wires (20, 21) are connected to form a continuous part, in particular two identical wires are provided.

13. Heatable media line (1) according to any one of claims 8 to 12,
**characterised in that**
the wires (20, 21) are unconnected or indirectly connected, in particular *via* a further line.

## Revendications

1. Procédé de production d'une conduite chauffable pour fluides (1), comprenant une conduite pour fluides (10), au moins un connecteur de conduite (11, 17, 211), une zone de transition (18, 19) entre la conduite pour fluides (10) et le connecteur de conduite (11, 17, 211) et au moins un élément chauffant (2), dans lequel l'élément chauffant (2) présente peu de torons (20, 21), en particulier deux torons,
dans lequel
une conduite tubulaire pour fluides est enroulée en continu avec l'élément chauffant et l'élément chauffant est fixé ou pré-équipé de manière fixe sur la conduite pour fluides par au moins un moyen de fixation (16),
la conduite pour fluides est mise à une première longueur en fonction de l'application, qui correspond à la longueur souhaitée de conduite pour fluides (I_{R}) plus la longueur d'élément chauffant (I_{H}) nécessaire à l'enroulement autour de l'au moins un connecteur de conduite (11, 17, 211) et de la zone de transition (18, 19),
le moyen de fixation (16) est retiré dans la zone (12, 13, 112, 113) en dehors de la longueur souhaitée de conduite pour fluides (I_{R}),
l'élément chauffant (2) est déroulé de la section de conduite pour fluides mise à la première longueur,
la conduite pour fluides est mise à la longueur souhaitée de conduite pour fluides (I_{R}) pour obtenir une deuxième section de conduite pour fluides (14, 114),
la section de conduite pour fluides (14, 114) est connectée en tant que conduite pour fluides (10) à l'au moins un connecteur de conduite (11, 17, 211), et
au moins l'au moins un connecteur de conduite (11, 17, 211) est enroulé avec l'élément chauffant.

2. Procédé selon la revendication 1,
**caractérisé en ce que**
avant la connexion de la section de conduite pour fluides (14, 114) à l'au moins un connecteur de conduite (11, 17, 211), au moins un dispositif (15) pour la protection et/ou pour l'isolation de la conduite pour fluides (10) est agencé autour de celle-ci, en particulier un tube ondulé est poussé axialement sur celle-ci.

3. Procédé selon la revendication 1 ou 2,
caractérisé en ce
les extrémités ouvertes (23, 24, 25, 26) de l'élément chauffant (2) sont connectées directement ou indirectement à un connecteur d'alimentation (40, 41) pour le raccordement à une source de courant ou de tension.

4. Procédé selon l'une quelconque des revendications 1 ou 2,
**caractérisé en ce que**
les extrémités ouvertes (23, 24, 25, 26) de l'élément chauffant (2) sont connectées les unes aux autres, en particulier dans la zone du connecteur de conduite (11, 17, 211).

5. Procédé selon l'une quelconque des revendications 1 à 4,
**caractérisé en ce que**
au moins un dispositif (29, 30) pour la protection et/ou pour l'isolation du connecteur de conduite (11, 17, 211) et/ou de la zone de transition (18, 19) entre la conduite pour fluides (10) et le connecteur de conduite (11, 17, 211) est agencé autour de ceux ci, en particulier des capuchons de protection (29, 30) pour l'enveloppement de l'au moins un connecteur de conduite (11, 17, 211) et de l'au moins une zone de transition (18, 19) vers la conduite pour fluides (10) sont agencés en entourant ceux-ci et/ou le dispositif de protection et d'isolation (15) entourant ceux-ci.

6. Procédé selon l'une quelconque des revendications 1 à 5,
**caractérisé en ce que**
l'élément chauffant (2) est enroulé au-delà de l'extension longitudinale de la conduite tubulaire pré-équipée pour fluides avec une pente différente par section sur celle-ci.

7. Procédé selon l'une quelconque des revendications 1 à 6,
**caractérisé en ce que**
l'élément chauffant (2) est enroulé lors du pré-équipement de la conduite tubulaire pour fluides de manière adaptative sur celle-ci et/ou que l'élément chauffant (2) est monté de manière adaptative sur la conduite pour fluides et/ou le connecteur de conduite (11, 17).

8. Conduite chauffable pour fluides (1), produite selon le procédé selon l'une quelconque des revendications précédentes, avec une conduite tubulaire pour fluides (10), au moins un connecteur de conduite (11, 17, 211), une zone de transition (18, 19) entre la conduite tubulaire pour fluides (10) et le connecteur de conduite (11, 17, 211) et au moins un élément chauffant (2), dans laquelle l'élément chauffant (2) présente peu de torons (20, 21), en particulier deux torons,
dans laquelle
un et les mêmes torons (20, 21) s'étendent en continu aussi bien le long de la conduite tubulaire pour fluides (10) que le long de l'au moins un connecteur de conduite (11, 17, 211), dans laquelle la conduite tubulaire pour fluides (10) est une conduite tubulaire pour fluides pré-équipée de torons (20, 21) et le chauffage de la conduite tubulaire pour fluides (10) elle-même et des connecteurs de conduite (11, 17, 211) connectés à celle-ci a lieu par le biais des torons (20, 21) prévus sur la conduite tubulaire pré équipée pour fluides.

9. Conduite chauffable pour fluides (1) selon la revendication 8,
**caractérisée en ce que**
les torons (20, 21) s'étendent sans point de connexion dans la zone de transition (18, 19) entre la conduite pour fluides (10) et le connecteur de conduite (11, 17, 211) et en continu le long du connecteur de conduite (11, 17, 211) et de la conduite pour fluides (10) sur leur côté extérieur respectif.

10. Conduite chauffable pour fluides (1) selon la revendication 8 ou 9,
**caractérisée en ce que**
les torons sont enroulés en forme de spirale et/ou de méandre autour du connecteur de conduite (11, 17, 211) ou sont agencés allongés autour du connecteur de conduite (11, 17, 211).

11. Conduite chauffable pour fluides selon la revendication 8, 9 ou 10,
**caractérisée en ce que**
l'élément chauffant (2) est monté de manière adaptative sur la conduite pour fluides (10) et/ou le connecteur de conduite (11, 17, 211), en particulier les torons (20, 21), au moins un moyen de fixation (16) pour la fixation des torons sur la conduite pour fluides (10) et/ou un dispositif d'isolation et/ou de protection (15, 29, 30) pour l'isolation et/ou pour la protection de la conduite pour fluides (10) et/ou du connecteur de conduite (11, 17, 211) et/ou d'une zone de transition (18, 19) entre la conduite pour fluides (10) et le connecteur de conduite (11, 17, 211) sont montés de manière adaptative.

12. Conduite chauffable pour fluides (1) selon la revendication 8, 9, 10 ou 11,
**caractérisée en ce que**
les torons (20, 21) sont connectés en un élément continu, en particulier deux torons identiques sont prévus.

13. Conduite chauffable pour fluides (1) selon l'une quelconque des revendications 8 à 12,
**caractérisée en ce que**
les torons (20, 21) sont non connectés ou connectés indirectement, en particulier par le biais d'une autre conduite.
